# EUROPEAN PATENT APPLICATION

(11) **EP 3 892 956 A1**
(43) Date of publication of application: **13.10.2021**
(21) Application number: 20382281.2
(22) Date of filing: 07.04.2020
(51) Int. Cl.: G01B 11/06, F27D 21/00, G01B 11/02, G01B 11/24

(54) **METHOD AND SYSTEM FOR MONITORING A REFRACTORY LINING OF A VESSEL**

(71) Applicant: Magnesitas Navarras S.A., 31630 Zubiri (ES); Tasiva Visión S.L., 31600 Burlada (Navarra) (ES)
(72) Inventor: Jauregui Elso, Iker, 31600 Burlada (Navarra) (ES); Lecuona Larrea, Jose Javier, 31600 Burlada (Navarra) (ES); Sanado Leceaga, Julen, 31630 Zubiri (NAVARRA) (ES); Rodríguez Corres, Joseba, 31630 Zubiri (NAVARRA) (ES)
(74) Representative: Balder IP Law, S.L.

(57) **Abstract**

The invention refers to a method and system for monitoring a refractory lining of a vessel, where a TOF camera projects a laser beam onto the refractory lining surface so as to create a plurality of laser spots onto a plurality of respective points on the refractory lining surface, the plurality of points generating a mesh representing the refractory lining surface. Then, the TOF camera gathers the laser beam after being reflected onto the plurality of points on the refractory lining surface and calculates a distance between the at least one TOF camera and each one of the plurality of points on the refractory lining surface. Based on the calculated distances and corresponding preestablished distances between the at least one TOF camera and the plurality of points on the refractory lining surface, a processor determines a current thickness of the refractory lining at the plurality of points.

## Description

### TECHNICAL FIELD

In general, the present invention relates to methods and systems for monitoring the refractory lining of vessels, preferably, in the steel and metal manufacturing sectors. More particularly, the present invention relates to methods and systems for monitoring the wearing of the refractory lining of the vessels that makes use of Time-Of-Flight (TOF) cameras to measure said wearing and to generate a three-dimensional (3D) map of the refractory lining inner surface of the vessel.

### STATE OF THE ART

Vessels or containers of various sizes and shapes are designed to hold materials at elevated temperatures, e.g., at temperatures above the melting point of the material, are widely used in many industrial applications, e.g., in the metal manufacturing sector. As known in the art, these vessels are normally made of metals and are lined with refractory material (that can be installed in brick form lining the inner surface of the vessel or can be directly casted on the inner surface of the vessel) in order to protect the metallic part of the vessel from the high-temperature materials placed therein. However, due to normal wear and tear of the refractory material due to the combined effects of oxidation, corrosion and mechanical abrasion generated by the high temperature molten materials, some portion of the refractory surface in contact with the molten material can be gradually lost during processing. Due to the wearing and tearing of the refractory material a frequent inspection of the vessel has to be performed so as to assure extended use of the vessel by performing early localized repair in order to avoid catastrophic failures, such as break of the vessel, and unnecessary or premature refurbishment of the entire vessel's refractory lining.

On the other hand, the costs associated to the repair of the refractory lining of the vessels have increased significantly over the past years, since the refractory materials used for lining are designed for application-specific containers or vessels. Moreover, the repair of the refractory lining implies stopping the production processes (manufacturing down time), which reduces the efficiency of the manufacturing processes and increases costs.

In order to minimize the need of carrying out repair or replacement operations in the refractory lining of the vessels and improve efficiency in using these refractory materials, some techniques have been developed to monitor the wear on the refractory material that protects the inner walls of the vessels.

Generally, the inspection of the condition of the refractory lining of the vessels has been carried out visually by an experienced operator looking for dark spots in the refractory lining indicating either high heat transfer rates to the refractory material and the vessel or the existence of a significant wear in a particular area of the lining. Based on said visual inspection, the operator may determine the need for lining repair. However, these operator-based techniques cannot be automated and systematized, require stopping the manufacturing processes during long times since the vessel must be allowed to cool before the inspection can take place, exposes the operator to industrial hazards and lacks the desired accuracy since these techniques rely on the experience and subjective opinion of the operator.

Other known techniques use light sources, such as lasers, for the measurement of the interior profile of the vessels used in the production of molten metals. These lasers are normally used to measure the distance between the laser sources and the surface of the vessel they are projected on and determine the inner refractory profile and calculate the remaining lining thickness. However, metal manufacturing processes in which the metal is molten at very high temperatures generate a great amount of metal dust that is suspended in the environment and that is mainly located in the area surrounding the mouth of the vessel in which the molten metal is contained. Since the lasers are generally projected from the outside towards the inner surfaces of the vessel through the plane defined by the mouth of the vessel, the measurements of the reflected laser beam captured by the corresponding detector are not reliable. This is because the reflective measurement systems, i.e., systems that project the light beam onto a surface and detect the time it takes for the reflected light to return to the corresponding detector, cannot assure that the reflected light beam comes from the surface on which it was supposed to be projected. In particular, the metal dust can be interposed in the trajectory of the laser beam such that said laser beam reflects on the surface of the suspended metal particles instead of on the refractory lining surface. This distorts the distances measured and thus, the measured wear of the refractory lining is not real. This problem is especially relevant when the cover of the vessel is just opened, that is also the moment in which these measures are normally carried out, since in this moment in when the metal dust concentration is higher.

Another disadvantage of these conventional measurement systems is that they normally gather a limited number of measures corresponding to a limited number of points on the inner surface of the vessel, which may result in undetected wear in spaces between the measured points on the refractory lining. Besides, the conventional measurement systems with light sources normally use complex and predefined space coordinate systems to reference the measurement heads (incorporating the light sources and eventually the light detectors) relative to the vessels and vice versa. Any displacement of the measurement heads or the vessel may result in obtaining invalid measurements since the predefined space coordinate system is no longer valid. Another disadvantage of these measurement systems is that they normally use light sources emitting at very high powers (in the order of Watts) to generate valid measures, which results in high electric consumptions and lower efficiency.

Therefore, based at least on the above-noted challenges of conventional techniques, there is still a need for devices, systems, and methods that are able to minimize or eliminate inconsistencies in the measured data regarding the wearing (i.e., the thickness) of the refractory lining of the vessels which are configured to carry materials at temperatures above the melting point of the metal. This will allow the early detection and inspection for molten metal creep or small holes in the lining (all of which can contribute to lining failure) thereby increasing operational safety of the vessel while reducing operating costs associated with expensive gunning operations to repair the refractory lining, refractory lining replacement and potential production down times. These devices and methods should also avoid using complex reference systems and provide reliable wear measures and an increased efficiency.

### DESCRIPTION OF THE INVENTION

A first object of the invention is a method for monitoring a refractory lining of a vessel. As used herein the term "vessel" may indistinctly refer to iron and steel ladles, Basic Oxygen Furnaces (BOFs), Argon-Oxygen Decarburization Vessels (AODs), Electric Arc Furnaces (EAFs), aluminium and copper smelting vessels, foundry furnaces, torpedo cars (shaped ladles on rails, used to transfer molten iron from the blast furnace to the steel making facility) and bottom blown furnaces (Q-BOP's), or any other type of containers adapted to contain materials at high temperature, e.g., materials at temperatures above the material melting point such as molten metals.

As used herein the term "refractory lining" may refer to a protective layer made of refractory material that is generally installed inside the vessel to protect the walls of the vessel from heat, pressure and chemical attacks generated by the material contained in such vessel. The refractory lining can be installed in brick form lining the inner surface of the vessel or can be directly casted on the inner surface of the vessel. In turn, the term "refractory material" may refer to materials with high thermal resistance and high-temperature strength. For example, the refractory material that is used to be installed as the inner protective layer of the vessels may be magnesia (MgO) based refractory materials that incorporate different magnesia aggregates and eventually some binding agents. Other refractory materials may be andalusite (Al₂SiO₅) based refractory materials, magnesia combined with carbon based refractory materials, etc. The working temperature of the refractory materials may reach up to 2000°C or even higher. In particular, the working temperature of the refractory materials in the steel manufacturing industry may range between 1500-1800°C. More particularly, the gunning refractory material used to be projected onto the inner surfaces of the vessel in order to repair wearing of the refractory lining may be made of any king of refractory materials, for example, materials comprising aggregates of sintered magnesia and binding agents or additives. This gunning refractory material may be lined on the refractory slagline of the vessel or on any other inner area of the vessel where the refractory lining needs to be repaired or reinforced.

The method for monitoring a refractory lining of a vessel makes use of TOF cameras that are configured to project respective laser beams onto the surface of the refractory lining of the vessel. These TOF cameras are positioned relative to the vessel such that the laser beams are projected onto the refractory lining surface through the mouth of the vessel. The method is carried out during the downtime periods of the vessel, in other words, when the vessel is empty. As used herein, the TOF cameras may refer to cameras that employ time-of-flight techniques to resolve distance between the camera and the object being monitored for each point of the image, by measuring the round trip time of an artificial light signal provided by a light source, e.g., a laser source. For example, the TOF camera may incorporate an RF-modulated light source and a phase detector imager such that the TOF camera is able to measure the phase shift of the RF carrier at the emitter and receiver sides and based on the comparison of said phase shifts the TOF camera calculates the distance between the TOF camera and the monitored object. Alternatively, other technologies for the TOF cameras, such as range gate imagers or direct TOF imagers, among others, may be used.

The method comprises projecting, by each one of the TOF cameras, the respective laser beam onto the refractory lining surface so as to create a plurality of laser spots onto a plurality of respective points on the refractory lining surface. The plurality of points creates a mesh of points that represent at least partially the refractory lining surface. This mesh (also known as point cloud) may represent a portion or the whole refractory lining surface of the vessel depending on the portion of the refractory lining that is being monitored. In particular, the mesh of points may correspond to a 3D representation of the portion of the refractory lining surface on which the laser beam has been projected. The TOF cameras gather the respective laser beams after being reflected onto the plurality of points on the refractory lining surface and calculate the corresponding distance between the TOF camera and each one of the plurality of points on the refractory lining surface. More specifically, a lens of the TOF camera gathers the reflected laser beam and images the environment onto the image sensor (focal plane array). Then, the image sensor of the TOF camera measures the time the laser beam has taken to travel from the laser source of the TOF camera to the refractory lining surface and back to the focal plane array.

Then a processor, that may be located remotely from the TOF camera in, for example, a control room determines a current thickness of the refractory lining at the plurality of points based on the calculated distances and corresponding preestablished distances between the at least one TOF camera and the plurality of points on the refractory lining surface. The processor may be a Central Processing Unit (CPU), microprocessor or any other suitable hardware or software processing device. These preestablished distances between the TOF cameras and the plurality of points on the refractory lining surface are distance measured before the refractory lining is exposed to heat, pressure or any chemical attack from the material contained inside the vessel. In other words, the preestablished distances are the distances between the TOF cameras and the laser spots projected onto the refractory lining surface measured before the vessel enters in operation and thus, before the refractory lining is subjected to wear.

In some embodiments, for determining the current thickness of the refractory lining at a particular point of the plurality of points, the processor compares the calculated distance and the preestablished distance between the at least one TOF camera and the particular point of the refractory lining surface, and determines the current thickness of the refractory lining at that particular point based on the result of the comparison. Since the thickness of the refractory lining (without being subjected to wear) is known, and thus the distance between the TOF camera and the refractory lining surface at any point of said surface, by determining the current distances between the TOF camera and the worn refractory lining surface, the current thickness of the refractory lining at those points can be derived.

In some embodiments, prior to projecting the laser beam onto the refractory lining surface, a reference system between the at least one TOF camera and the vessel is determined. The reference system may comprise at least a set of fixed reference points located on the structure of the vessel. When the mesh of points is generated by the processor, there may be some spatial deviation of the vessel or the TOF cameras relative to the original spatial relationship between said TOF cameras and the vessel when the predefined mesh obtained prior to exposing the refractory lining to wear was obtained. By using said fixed reference points, the generated mesh and the predefined mesh can be appropriately overlaid and the distances between corresponding points of both meshes compared. This simple and fixed reference system avoids having to determine complex and dynamic positional reference systems where any spatial deviation of any of the components of the measuring system may invalidate the measures obtained by the systems. Thus, the comparison between the obtained and predefined meshes of points are carried out according to the fixed reference points of the predefined reference system.

In some embodiments, the reference system, in addition to the fixed reference points, may comprise a camera coordinate system to reference the at least one TOF camera relative to the vessel. Said camera coordinate system references the TOF camera relative to the vessel and registers, by corresponding encoders, any movement of the TOF camera relative to the vessel (there is an encoder that monitors the stepper motor that moves the TOF camera relative to the vessel) and the orientation of the laser beam relative to the TOF camera (there are encoders within the TOF camera to monitor the movements of the mirrors that orientate the laser beam so the orientation of the laser beam relative to a horizontal plane of the TOF can be derived). By using point cloud positioning and alignment algorithms, the fixed reference points and the camera coordinate system, the processor is able to determine distance between the projected spots onto the refractory lining surface and thus, the current thickness of the refractory lining in each one of these points. For example, these algorithms may be iterative closest point (ICP) algorithms, normal distribution transform (NDT) algorithms, etc.

In some embodiments, a 3D map representing the wearing of the refractory lining surface is generated. This 3D map is based on the result of the comparison between the generated mesh and the predefined mesh. The 3D map represents the wearing of the lining surface based on the differences between the distances obtained for the points of the generated mesh and the distances obtained for the corresponding points of the predefined mesh. This 3D map may represent the refractive lining surface profile with different colours depending on the wearing measured. In order to show a more accurate representation of the refractive lining surface profile, the processor may interpolate the values of the differences obtained for the corresponding points obtaining other intermediate values that will also be used to generate the 3D map. The 3D map may also comprise a colour code warning about the grade of wearing suffered by the refractory lining surface. For example, a red colour may be assigned to those areas of the 3D map having a wearing greater than a predefined threshold, e.g., 5 cm, and a green colour may be assigned to those areas of the 3D map having a wearing lower than another predefined threshold, e.g., 2 cm. Other colours such yellow or orange may be assigned to areas of the 3D map having a wearing ranging from 5 to 2 cm depending on other predefined thresholds. In this way, the 3D map provides an intuitive and visual representation of the integrity status of the refractory lining and a user may easily decide on which areas of the refractory lining a gunning operation may be recommended or required. Similarly, the processor may automatically determine on which areas of the refractory lining a gunning operation may be recommended or required based on the cited or other thresholds.

In some embodiments, a first laser beam emitted by a first TOF camera is projected onto a first portion of the refractory lining surface so as to generate a first mesh representing the first portion and a second laser beam emitted by a second TOF camera is projected onto a second portion of the refractory lining surface so as to generate a second mesh representing the second portion. Then, the processor combines the first mesh and the second mesh to create a third mesh representing a combination of the first and second portions. For example, the first TOF camera may be configured to project its laser beam over half of the refractory lining surface to generate a first mesh representing said half portion of the refractory lining surface and the second TOF camera may be configured to project its laser beam over the other half of the refractory lining surface to generate a second mesh representing said other half portion of the refractory lining surface. By combining said first and second mesh, a third mesh representing the whole refractory lining surface is obtained. In some other embodiments, a different number of TOF cameras projecting respective laser beams on the refractory lining surface of the vessel, said laser beams being swept over portions of refractory lining surface having the same or different geometry, shape or size, may be used to obtain corresponding meshes that may be combined to generate bigger meshes representing combined portions of the refractory lining of the vessel. To combine said meshes, the processor may use the reference system to correctly position one mesh relative to the other meshes.

In some embodiments, when the meshes are to be combined there may be overlapping areas between them. In such embodiments, the method comprises detecting said overlapping areas between the meshes that are going to be combined and applying a point cloud alignment algorithm on the overlapping areas or the whole meshes for combining the first and second meshes. For example, these algorithms may be iterative closest point (ICP) algorithms, normal distribution transform (NDT) algorithms, etc.

A second object of the present invention is a system for monitoring a refractory lining of a vessel. The system comprises at least one TOF camera configured to project a laser beam onto a surface of the refractory lining of the vessel and a processor. These TOF cameras are positioned relative to the vessel such that the laser beams are projected onto the refractory lining surface through the mouth of the vessel. The processor may be located remotely from the TOF cameras so the heat, electromagnetic and light radiation emitted from the vessel does not affect this component. The at least one TOF camera is configured to project a laser beam onto the refractory lining surface of the vessel so as to create a plurality of laser spots onto a plurality of respective points on the refractory lining surface. The plurality of points creates a mesh of points that represents at least partially the refractory lining surface. In particular, the mesh of points may be a 3D representation of the portion of the refractory lining surface on which the laser beam has been projected. The at least one camera is further configured to receive the laser beam after being reflected onto the plurality of points on the refractory lining surface and to calculate a distance between the at least one TOF camera and each one of the plurality of points on the refractory lining surface. The processor, upon reception of the distances calculated by the TOF cameras, is configured to determine a current thickness of the refractory lining at the plurality of points based on the calculated distances and corresponding preestablished distances between the at least one TOF camera and the plurality of points on the refractory lining surface.

The communication between the TOF cameras, that will be located in proximity to the vessel, and the processor, that may be located in control room, is carried out by a wired connection in order to minimize the effect of the magnetic perturbances generated by the melting material inside the vessel. In addition, the wired connection may comprise an electromagnetic shielding to improve the quality and reliability of the signals received at the processor. The TOF cameras may comprise physical filters, such as zirconium dioxide filters, to filter and screening the electromagnetic and light radiation that may receive from the vessel during the monitoring operation. The TOF cameras may further comprise digital filters, centred in their laser emitting frequency peaks, to reduce spectral noise received at the cameras and to filter deviated measures generated due to, for example, suspended metal particles inside the vessel and in the area surrounding the mouth of the vessel.

By way of example, the TOF cameras may be exposed to the vessel during about 7 seconds per monitoring cycle and each camera may be configured to project up to 20.000 laser spots onto the refractory lining surface per second during said monitoring cycle for calculating the corresponding 20.000 distances between the TOF camera and the respective points. Thus, in such example, each TOF camera may generate a mesh of about 140.000 points representing at least part of the refractory lining surface per monitoring cycle. By exposing the TOF cameras to the vessel during periods of about 7 seconds (the vessel is empty during these monitoring cycles), the optics and electronics of the camera are not affected by the heat emitted by the vessel. By generating a mesh representing the refractory lining surface with such large number of points, about 140.000 points per camera, the system ensures that the deviations introduced by erroneous distance measures that may be gathered due to, for example, the suspended metal particles that reflect the laser beams, can be easily identified and cancelled (or at least significantly attenuated). For example, a digital filer may be implemented to delete those distance measures which are out of a range centred in a value corresponding to the average of all the gathered distance measures. Other strategies for deleting these erroneous measures may be implemented. This improves the quality of the resulting measures and of the mesh of points generated which increases the reliability of the process for monitoring of the thickness of the refractory lining of the vessel herein described. The TOF cameras may be exposed to the vessel for a different period of time (other than 7 seconds) per monitoring cycle depending on particular requirements or needs.

In some embodiments, the system comprises a guiding system for the laser beam. Said guiding system comprises first guiding means located within the TOF cameras that are configured to project the laser beam onto the refractory lining surface along a first direction and second guiding means configured to move the at least one TOF camera in a second direction. Thus, the combined displacement of the laser beam in the first direction and the TOF camera in the second direction allows projecting the laser beam with a 2D pattern over the desired refractory lining surface portion. The first direction and the second direction may be orthogonal to each other. For example, the first guiding means may comprise a set of mirrors to project the laser beam along the first direction. Sais set of mirrors can be moved by a first stepper motor and monitored by a first high-frequency encoder located within the TOF camera. The second guiding means may be a second stepper motor and a second high-frequency encoder to move and monitor the TOF camera, or at least the mirrors of the TOF camera, in the second direction so as to project the laser beam along said second direction. The combination of the movement of the laser beam in the two directions allows the laser beam to swept surfaces of the refractory lining.

In some embodiments, the at least one TOF camera and the guiding system are located within a measurement head. This measurement head may comprise thermal isolation means to protect the TOF cameras and the guiding system from heat. The second guiding means, e.g., the second stepper motor, may move the entire measurement head along the second direction.

In some embodiments, the TOF cameras, and more preferably the measurement head in which the TOF cameras can be inserted, are located at a free end of a robotic arm that is positionable at a height over a mouth of the vessel during monitoring operation. For example, the robotic arm may be an extensible telescopic arm or a pivoting arm that is only extended and positioned over the mouth of the vessel when the vessel is empty and the monitoring operation is to be carried out. The free end of the robotic arm may be positioned at 3 meters over the mouth of the vessel to ensure that heat from the vessel does not damage the TOF cameras. The free end of the robotic arm may also be positioned centred relative to the mouth of the vessel to ensure that the laser beams projected by the TOF cameras are able to cover the entire refractory lining surface.

In some other embodiments, the TOF cameras, and more preferably the measurement head in which the TOF cameras are inserted, are attached to a frame external to the vessel. This frame is a fixed frame and the TOF cameras may be directed towards the mouth of the vessel on which the monitoring of the refractory lining is to be performed so that the laser beams projected by the cameras can be swept on the refractory lining surface.

Although the orientation of the vessel during the casting production periods and the down time periods may be different, the TOF cameras will be oriented such that they will be directed towards the mouth of the vessel during the periods in which the monitoring of the refractory lining is going to be performed.

In some embodiments, the system comprises a first TOF camera configured to project a first laser beam onto a first portion of the refractory lining surface so as to generate a first mesh representing the first portion, and a second TOF camera configured to project a second laser beam onto a second portion of the refractory lining surface so as to generate a second mesh representing the second portion. The processor is configured to combine the first mesh and the second mesh to create a third mesh representing a combination of the first and second portions. For example, the first portion may extend from a first point on an edge of a mouth of the vessel to a centre point of the mouth of the vessel, and the second portion may extend from the centre point of the mouth of the vessel to a second point on the edge of the mouth of the vessel, the first point and the second point on the edge being located opposite to each other. In this way, each TOF camera covers half of the refractory lining surface. By using two TOF cameras respectively covering a half of the refractory lining surface of the vessel, the time spent by the TOF cameras on gathering the reflected laser beams is significantly reduced, minimizing the down time periods of the vessel and the time the TOF cameras are exposed to the ambient conditions in the vicinity of the mouth of the vessel.

In some other embodiments, there may be three TOF cameras positioned at a height and equidistant from each other around the mouth of the vessel. For example, the three TOF cameras may be integrated in three respective measuring heads, that may be coupled to a fixed frame external to the vessel or to a movable robotic arm. The three cameras will be positioned at a height that ensures that the heat coming from the vessel does not damage their optics or electronics. The three cameras are positioned equidistant to each other around the mouth of the vessel to ensure that the projected laser can be swept, in a complementary manner (each laser covers about a third of the total surface), the entire refractory lining surface.

In some embodiments, the wavelength of the laser beams emitted by the TOF cameras is an infrared wavelength. More particularly, the wavelength of the laser beams ranges between 850 and 1050 nm. In addition, the laser may have an average power of 18mW or similar. Using TOF cameras that works within the infrared spectrum avoids problems associated to the intense light radiation generated inside the vessel.

In some embodiments, the measurement head may be refrigerated. The refrigerated measurement head ensures that the electronics of the camera and the guiding system are not damaged due to the heat coming from the vessel. It further allows to position the laser assembly and the camera closer to the mouth of the vessel improving the quality of the measure obtained and the efficiency of the monitoring of the refractory lining.

A third object of the present invention is a method for gunning a refractory lining of a vessel. This method firstly determines the current thickness of the refractory lining of the vessel as previously described. Then, the processor compares the current thickness of the refractory lining with a predetermined thickness of the refractory lining. This predefined thickness of the refractory lining is obtained prior to exposing the vessel to wearing and corresponds to the thickness of the original brick wall that protects the vessel. After, the processor determines points of the refractory lining whose thickness is lower than a predefined threshold based on the previous comparison and a refractory material is gunned over areas corresponding to the determined points.

For example, the processor may identify the points in the refractory lining whose thickness is lower than a predefined threshold and send the location of said points to a gunning robot that will introduce a gunning nozzle through the mouth of the vessel to cast the gunning refractory material on the areas of the refractory lining corresponding to the determined points. Alternatively, the gunning operation could be carried out manually by an experienced operator.

In some examples, the processor may be further configured to generate the 3D map of the wearing of the refractory lining surface and use this map for determining those areas of the refractory lining that need to be repaired.

The solution herein described may be used in the integral steel production industry: blast furnaces, heaters, coke furnaces sets, cast iron mixers, ladle cranes, train cars, electrical furnaces; in the steel industry: electrical furnaces, converters, ladles, troughs, de-gasification furnaces, heat treatment and refine furnaces, push and moving beams rolling furnace; into the glass industry: melting furnaces for hollow and flat glass, tin baths, annealing furnaces; in the metals industry: copper melting furnaces, aluminium furnaces, anode cooking furnaces, pyrite roasting furnaces, lead furnaces, melting towers; in the cement industry: rotary kilns, heat exchangers, kiln hoods, grate and satellite coolers; in waste treatment industry: grate incineration furnaces, fluidised bed furnaces for urban and industrial waste, combustion chambers; in the ceramics industry: tunnel kilns, chamber kilns, wagons; in the petrochemical industry: petrol furnaces, ethane furnaces and related processes, boilers, cracking furnaces; chimneys; and other various industries: vertical shaft kilns, sugar dryers, hot gas generators for power stations, arch furnaces for foundries, vertical kilns for lime, rotary kilns for paper sectors, sinterisation kilns.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Figure 1 shows a flow diagram of the method for monitoring the wearing of the refractory lining surface of a vessel, according to a particular embodiment of the invention.
Figure 2 shows a system for monitoring the wearing of the refractory lining surface of a vessel, according to a particular embodiment of the invention.
Figure 3 shows a portion of the refractory lining surface on which a laser beam is projected, according to a particular embodiment of the invention.
Figure 4 shows a front perspective view of a measurement head including two TOF cameras for monitoring the wearing of the refractory lining surface of a vessel, according to a particular embodiment of the invention.
Figure 5 shows an exploded view of part of the measuring head shown in Figure 4, in particular, of the part of the measuring body corresponding to one of the two TOF cameras.
Figure 6 shows a rear perspective view of the measuring head of Figure 4 with the rear portion of the outer casing removed to show the inside of the measuring head.
Figure 7 shows a generated 3D map representing the wearing of a portion of the refractory lining surface of a vessel, according to a particular embodiment of the invention.
Figure 8 shows another generated 3D map representing the wearing of a portion of the refractory lining surface of a vessel, according to a particular embodiment of the invention.

### DETAILED DESCRIPTION OF THE INVENTION

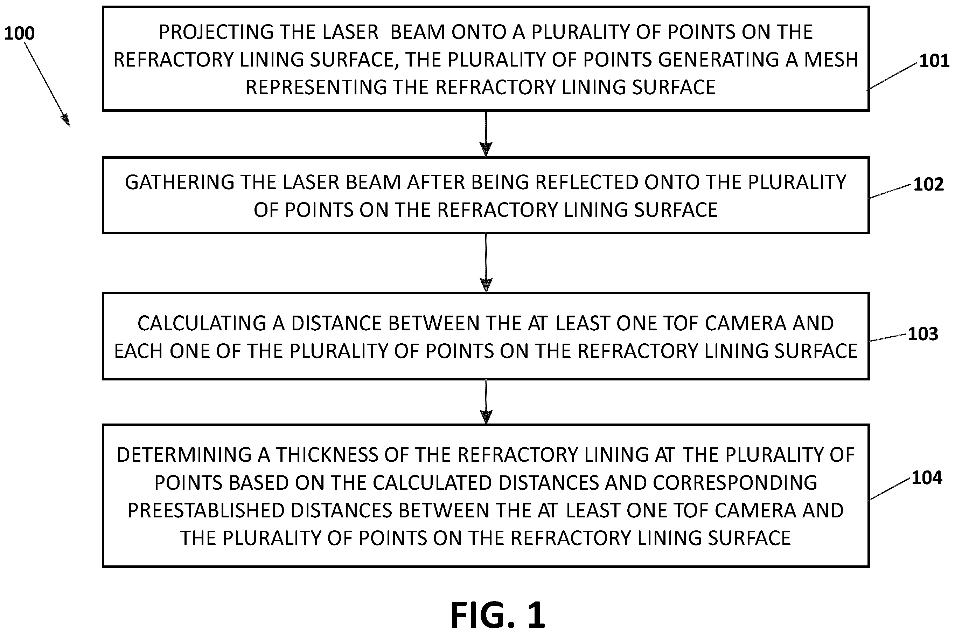

Figure 1 shows a flow diagram of the method 100 for monitoring the wearing of the refractory lining of a vessel, according to a particular embodiment of the invention.

At step 101 of the method 100, the laser beams emitted by the TOF cameras are projected onto the refractory lining surface so as to create a plurality of laser spots onto a plurality of respective points on the refractory lining surface. This plurality of points (point cloud) generates a mesh that provides a 3D representation of the refractory lining surface on which the laser beams are being projected. The laser sources of the TOF cameras are infrared laser sources whose operational wavelengths may range between 850 and 1050 nm. For example, the operational wavelength of the laser sources may be 950 nm and its average power may be 18 mW approximately, although other average powers may be used.

At step 102 of the method 100, the TOF camera, and more particularly the lens of the TOF camera, gathers the laser beam once reflected onto the plurality of points on the refractory lining surface and images the environment onto the image sensor (focal plane array) of the TOF camera. Then, the image sensor of the TOF camera measures the time the laser beam has taken to travel from the laser source of the TOF camera to the refractory lining surface and back to the focal plane array.

At step 103 of the method 100, the TOF camera calculates the distance between the TOF camera and each one of the plurality of points on which the laser beam has been projected.

At step 104 of the method 100, the processor (that is preferably located in a control room far from the vessel to do not be affected by the light and heat radiation emitted by the vessel and its content) determines the current thickness of the refractory lining at the plurality of points based on the calculated distances and corresponding preestablished distances between the at least one TOF camera and the plurality of points on the refractory lining surface. These preestablished distances are the distances between the TOF cameras and the laser spots projected onto the refractory lining surface measured before the vessel enters in operation and thus, before the refractory lining is subjected to wear.

While steps 101 and 102 of the method 100 are carried out during downtime periods of the vessel, steps 103 and 104 may be performed later.

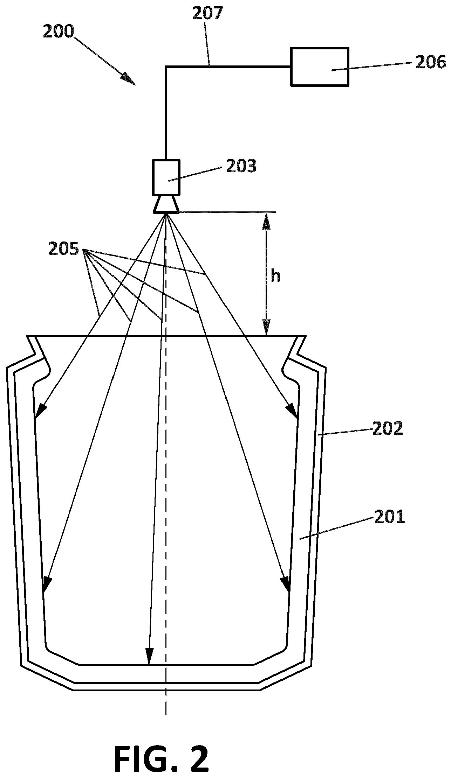

Figure 2 shows a system 200 for monitoring a refractory lining 201 of a vessel 202. It should be understood that the system 200 of Figure 2 may include additional components and that some of the components described herein may be removed and/or modified without departing from a scope of the described system 200. Additionally, implementation of the system 200 is not limited to such embodiment.

The vessel 202 is made of a metal or a metal alloy that is able to withstand very high temperatures and its inner surface is lined with a layer of refractory material 201 that can be installed in brick form lining the inner surface of the vessel 202 or can be directly casted on the inner surface of the vessel 202. This layer of refractory material 201 protects the vessel 202 from the heat, pressure and chemical attacks coming from the molten materials placed therein. The layer of refractory material 201 substantially covers the inner surface of the vessel 202.

The system 200 comprises a TOF camera 203 that is located centred at a height (h) relative to the mouth 204 of the vessel 202, for example, at 3 meters above the plane defined by the mouth 204 of the vessel. This position of the TOF camera 203 relative to the mouth 204 of the vessel 202 allows the TOF camera 203 to project its laser beam 205 on the entire surface of the layer of refractory material 201. The laser source of the TOF camera 203 emits a laser beam with a wavelength of 950nm (infrared spectrum) and an average power of 18mW. Emitting in the infrared spectrum and with this average power guarantees that the laser beams projected on the refractory lining material 201 are not hidden (masked) by the intense light radiation generated inside the vessel so the TOF camera 203 is able to gather the reflected laser beams. By way of example, the TOF camera 203 may project its laser beam on the refractory lining surface for about 7 seconds and may project about 140.000 points onto the refractory lining surface per monitoring cycle. By exposing the TOF camera 203 to the empty vessel during periods of about 7 seconds, the optics and electronics of the TOF camera 203 are not affected by the heat, electromagnetic and light radiation emitted by the vessel 202.

The TOF camera 203 is wired to a processor 206 that may be located in a control room located within the industrial facility. The wired connection 207 between the TOF camera 203 and the processor 206 minimizes the effect of the magnetic perturbances generated by the melting material inside the vessel or by the heat radiated by the vessel even when it is empty. In addition, the wired connection 207 may comprise an electromagnetic shielding to improve the quality and reliability of the signals received at the processor 206. The TOF camera 203 comprises a molybdenum dioxide filter (not shown in this figure) for filtering and screening the electromagnetic and light radiation received from the vessel 202. In addition, the TOF camera 203 comprises a digital filter centred in 950nm, to reduce spectral noise received at the TOF camera 203.

The TOF camera 203 may be positioned relative to the vessel 202 by means of a robotic arm (not shown in the figure) during the down time periods of the vessel 202 and set apart from the vessel during the production periods of the vessel 202. Alternatively, the TOF camera 203 may be coupled to a fixed frame (not shown) external to the vessel 202.

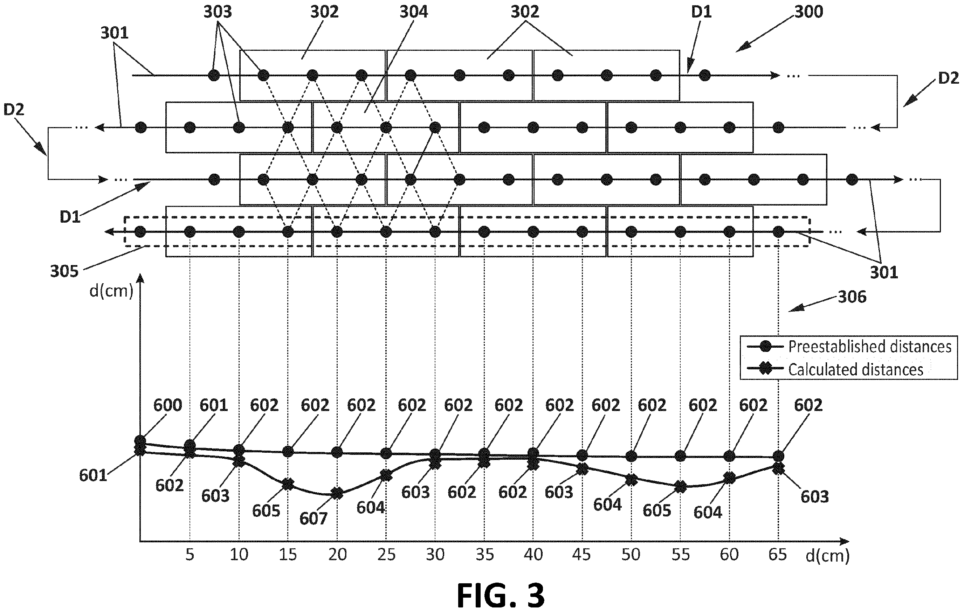

Figure 3 shows a portion of the refractory lining layer 300 on which a laser beam 301 is projected, according to a particular embodiment of the invention. The refractory lining layer 300 is formed by a plurality of bricks 302 made of refractory material. For example, the bricks 302 may be made of a magnesia (MgO) based refractory material. The TOF camera (not shown in this figure) is configured to project a laser beam 301 that generates three laser spots 303 on the surface of each brick 302 of the refractory lining layer 300. In such embodiment, the bricks 302 are 20 cm long and 5 cm wide such that the distance between the laser spots 303 is about 5 cm. The plurality of the laser spots 303 projected onto respective points of the bricks 302 generates a mesh 304 that represents the portion of the surface of the refractory lining layer 300 on which the laser beam 301 is projected.

The laser beam 301 firstly moves in a first direction (D1), corresponding to the longitudinal axis of the bricks 302, and then in a second direction (corresponding to the transversal axis of the bricks 302) drawing a 2D serpentine pattern on the refractory lining surface.

The refractory profile of the set of laser spots 305 is shown in the graph 306 below. In such embodiment, the TOF camera is positioned at 3 meters above the mouth of the vessel (as shown in figure 2) and the portion that is being monitored is about three meters below the plane defined by the mouth of the vessel. Therefore, the portion of the refractory lining layer 300 being monitored is about 6 meters below the TOF camera. Then, the laser spots 303 of the preestablished mesh (mesh generated before the refractory lining layer is subjected to wear) are projected onto the surface at a distance from the TOF camera that ranges between 600 and 602 cm. Once the refractory lining layer 300 has been subjected to wear, the distances at which the same points of the refractory lining layer 300 are located from the TOF camera (that is located in the same position relative to the vessel than when the preestablished distances were obtained) range from 601 to 607 cm. Thus, by comparing the respective preestablished and calculated distances for each point, the wear of the refractory lining layer 300 can be obtained. This wear ranges from 0 to 5 cm.

While in this embodiment a 5x5 cm mesh is shown, the number of lines per mesh or the number of points per line may be increased or reduced depending on the time the TOF cameras are exposed to the inside of the vessel or the accuracy requirements. For example, the dimensions of the mesh may be 4x4 cm or 3x3 cm in order to increase the accuracy of the measurement of the wear to which the refractory material of the vessel is subjected. In addition, the point density may vary based on the area of the vessel that is being swept by the TOF cameras. For example, the TOF cameras may project a higher number of laser spots on those areas of the refractory lining layer subjected to high wear.

In any case, the number of points on the refractory lining surface of the vessel for which the distance is obtained will be high enough to ensure that any erroneous measure of the distance (due to, for example, suspension metal particles that reflects the laser beam) gathered by the TOF camera can be easily detected (erroneous distance values among many correct measures can be easily tracked) and erased (or at least minimized) by the digital filters used and thus, said erroneous measures will not distort the generated mesh.

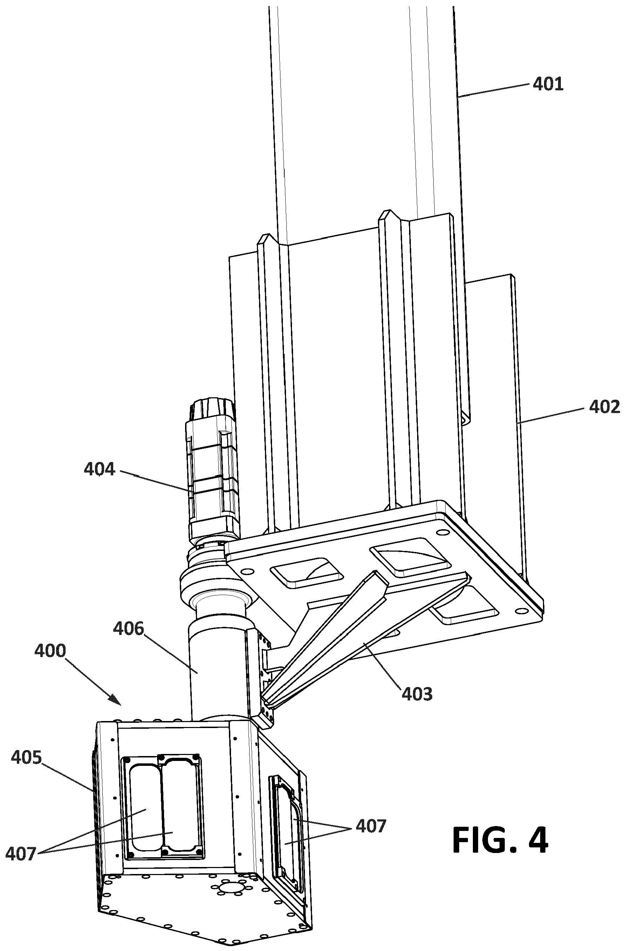

Figure 4 shows a perspective front view of a measurement head 400 including two TOF cameras (not shown in this figure) for monitoring the wearing of the refractory lining surface of a vessel, according to a particular embodiment of the invention. It should be understood that the measuring head 400 of Figure 4 may include additional components and that some of the components described herein may be removed and/or modified without departing from a scope of the described measuring head 400. Additionally, implementation of the measuring head 400 is not limited to such embodiment.

The measuring head 400 is coupled to the free end of a robotic arm 401. The robotic arm 401 may be an extensible telescopic arm or a pivoting arm, among other types of arms, that is configured to be extended and positioned over the mouth of the vessel when the vessel is empty and the monitoring operation is going to be performed. The free end of the robotic arm 401 may be positioned, for example, at least at three meters over the mouth of the vessel to ensure that heat from the vessel does not damage the TOF cameras. The distance at which the monitoring head 400 is positioned over the mouth of the vessel may depend on the temperature reached by the vessel during the production process and thus, its temperature during the down time periods. The free end of the robotic arm 401 may also be positioned centred relative to the mouth of the vessel to ensure that the laser beams projected by the TOF cameras are able to cover the entire refractory lining surface. Alternatively, the measuring head 400 may be attached to a fixed frame located in the vicinity of the vessel and may be positioned off-centre regarding the mouth of the vessel.

The measuring head 400 is coupled to the free end of the robotic arm 401 by means of a U-shaped adapter 402 that is attached the free end of the robotic arm 401 and a coupler 403 that is attached to the U-shaped adapter 402 and to the measuring head 400. The measuring head 400 is formed by a stepper motor 404, a measuring body 405, in which the TOF cameras are located, and a rotating shaft 406 for transmitting the rotational movement of the stepper motor 404 to the measuring body 405. The measuring body 405 comprises two pairs of filters 407, such as zirconium dioxide filters, to filter and screening the electromagnetic and light radiation that the TOF cameras may receive from the vessel during the monitoring operation. In particular, each filter of the two pairs of filters are to respectively protect the light source (emitter) and light detector (receiver) of the TOF cameras from heat, electromagnetic and light radiation. In this particular embodiment, the two TOF cameras are oriented to form a 120-degree angle between them. Depending on the distance of the measuring head 400 to the vessel, the dimensions of the vessel and the dimensions of the refractory lining surface to be monitored, the angle formed by both TOF cameras may vary. This angle should ensure that the refractory lining surface to be monitored can be entirely swept by the laser beams emitted by the TOF cameras.

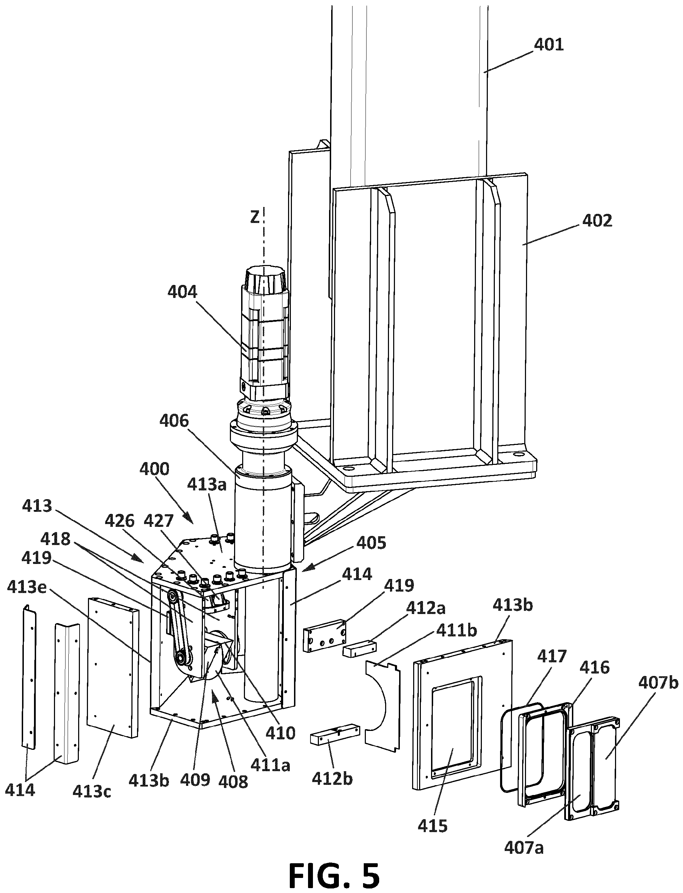

Figure 5 shows an exploded view of part of the measuring head 400 shown in Figure 4, in particular, of the part of the measuring body 405 corresponding to one of the two TOF cameras 408.

The measuring body 405 has an outer casing 414 formed by an upper panel 413a, a lower panel 413b, two side panels 413c, two front panels 413d and a rear panel 413e. The front panels 413d, the side panels 413c and the rear panel 413e are coupled to each other by reinforcing pieces 414 and are also screwed to the upper panel 413a and to the lower panel 413b.

The TOF camera 408 comprises a laser source 426, e.g., a RF-modulated laser source, to emit the laser beam onto the refractory lining surface of the vessel and a laser detector 427, e.g., a phase detector imager, to receive the reflected laser beam so that the TOF camera 408 is able to measure the phase shift of the RF carrier at the laser source 426 and laser detector 427 sides and based on the comparison of said phase shifts the TOF camera 408 calculates the distance between the TOF camera 408 and the monitored vessel. Alternatively, other technologies for the TOF cameras 408, such as range gate imagers or direct TOF imagers, among others, may be used. The laser source 426 emits a laser beam that is projected onto a first mirror or mirror set 409 that is used for angular displacement and is positioned so as to project the corresponding laser spot onto a plurality of points of the refractory lining surface of the vessel. This first mirror or mirror set 409 will be actuated by a stepper motor (not show in this figure) to modify the angular displacement of the laser beam towards the vessel, in other words, to orientate the laser beam. The laser detector 427 captures the reflected laser beam after being reflected on a second mirror or mirror set 410. This second mirror or mirror set 410 will be actuated by the same stepper motor (not show in this figure) to orientate the reflected laser beam towards the laser detector 427. The laser source 426 and the firs mirror or mirror set 409 are separated from the laser detector 427 and the second mirror or mirror set 410 by a panel 411a-b, e.g., an opaque panel, formed by a first panel portion 411a directly coupled to the TOF camera 408 and that rotates with the first mirror 409 and second mirror 410 and a second panel portion 411b inserted in respective guiding slots of an upper guiding piece 412a and of a lower guiding piece 412b. The panel 411a-b avoids the laser beam emitted by the laser source 426 to illuminate the laser detector 427 and the reflected laser beam received at the laser detector 427 to illuminate the laser source 426. The upper and lower guiding pieces 412a-b are coupled, e.g., by screws, to the inner surface of the front panel 413d, in particular, in correspondence to the upper and lower edges of the window 415 of the front panel 413d.

The filters 407a-b are coupled to the window 415 by interposition of a frame 416 and a gasket seal 417. The laser beam emitted by the laser source 426 passes through the corresponding filter 407a and the reflected laser beam passes through the respective filter 407b and is received at the laser detector 427.

The stepper motor 404 is configured to rotate the measuring body 405 around the Z-axis so as the laser beam of the TOF cameras 408 can swept the refractory lining surface in a first direction. The stepper motor 404 is connected to a high-frequency encoder (not shown) to monitor the relative position (and orientation) of the measuring body 405 relative to the vessel in this first direction. This encoder may be coupled to the rotating shaft 406 or may be integrated into the stepper motor 404.

The TOF cameras 408 are coupled to the outer casing 413 by a frame formed by two side retaining arms 418 attached, e.g., screwed, to the upper panel 413a and two reinforcing elements 419 that couple the two side retaining arms 418 to each other at their front and rear edges.

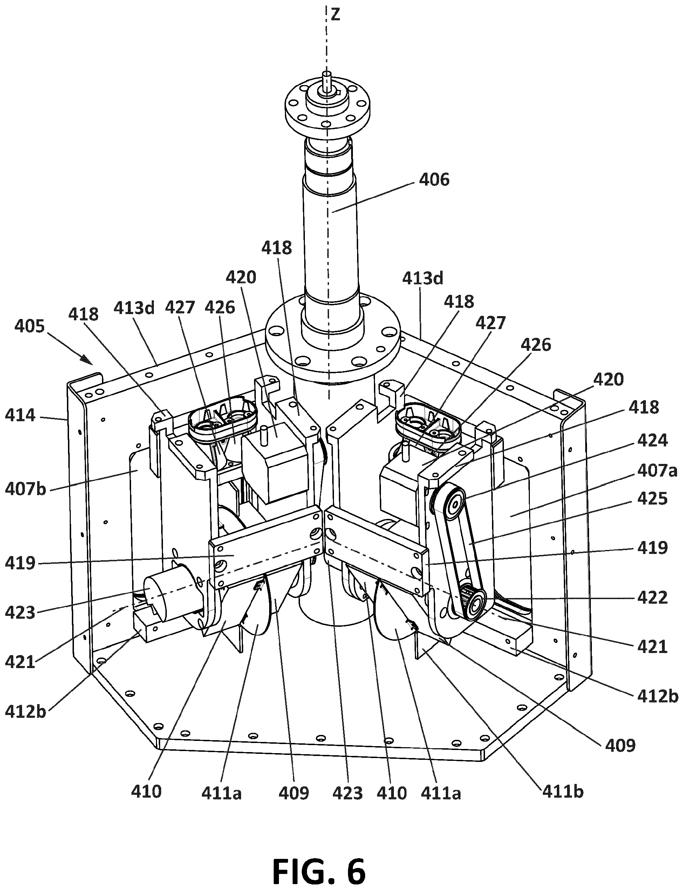

Figure 6 shows a rear perspective view of the measuring head 400 of Figure 4 with the rear portion of the outer casing 413, in particular the rear panel 413e and the two sides panels 413c, being removed to show the inside of the measuring head 400. More particularly, this figure 6 shows a rear inner view of the measuring body 405 and an inner view of the rotating shaft 406.

Each TOF camera 408 further comprises a stepper motor 420 for the angular displacement of the first and second mirrors 409,410, in other words, to rotate the first and second mirrors 409,410 around their respective rotation axis 421 so as the laser beams of the TOF cameras 408 can swept the refractory lining surface in a second direction and can be gathered after reflecting on the refractory lining surface. This rotation axis 421 is determined by a corresponding rotation shaft (not shown) that is coupled at one end to a driven gear 422 and at the opposite end to a high-frequency encoder 423. These encoders 423 are configured to monitor the relative position (and orientation) of the first mirror 409 and the second mirror 410 relative to the outer casing 413. By combining the movement of the laser beam in the first direction and the in the second direction, a 2D pattern is projected onto the desired refractory lining surface portion. The first direction and the second direction are orthogonal to each other.

The stepper motors 420 actuate on respective drive gears 424 that transmit the rotational movement of the steeper motor 420 to the driven gears 422 by means of corresponding transmission belts 425. In other examples, the stepper motors 420 may directly provide the rotational movement to the first and second mirrors 409,410 or may transmit it by means of any other known transmission device.

In such embodiment, one of the two TOF cameras 408 is configured to project a first laser beam onto a first portion of the refractory lining surface so as to generate a first mesh representing said first portion. The second TOF camera 408 is configured to project a second laser beam onto a second portion of the refractory lining surface so as to generate a second mesh representing the second portion. The first portion extends from a first point on an edge of a mouth of the vessel to a centre point of the mouth of the vessel, and the second portion may extend from the centre point of the mouth of the vessel to a second point on the edge of the mouth of the vessel, the first point and the second point on the edge being located opposite to each other. Therefore, the stepper motors 404 and 420 are configured to move each of the laser beams to swept about half of the refractory lining surface. Then the processor, located in a control room, combines the first mesh and the second mesh to create a third mesh representing a combination of the first and second portions.

While the measuring head 400 shown in figures 4-6 comprises two TOF cameras positioned to form a 120-degree angle between them, other embodiments may comprise a different number of TOF cameras disposed at a different angle among them.

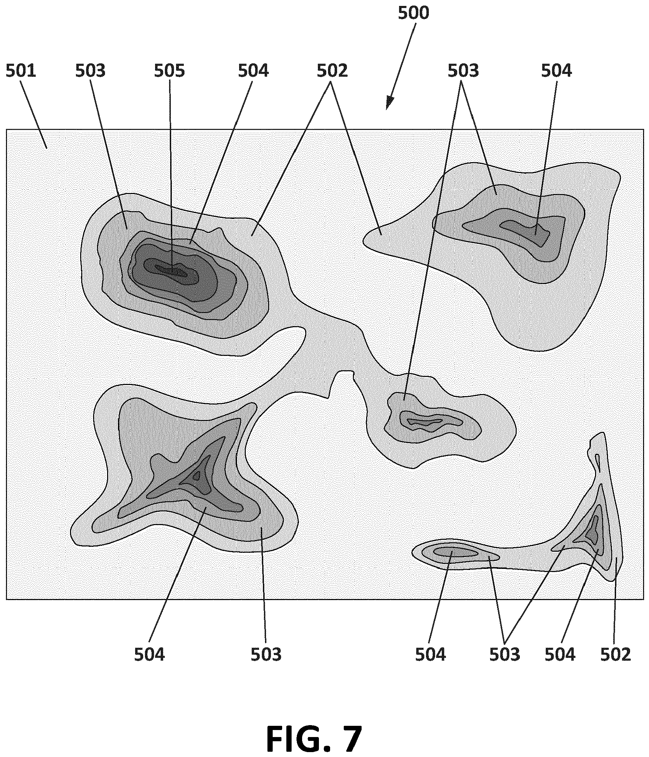

Figure 7 shows a generated 3D map 500 representing the wearing of a portion of the refractory lining surface of the vessel, according to a particular embodiment of the invention.

The 3D map 500 corresponds to a portion of the refractory lining surface of, for example, 1,2x1 meters. Thus, it may correspond to an area covered by 120 bricks (20x5 cm) of refractory material, approximately. Darker zones represent areas of the portion of the refractory lining surface more worn out and lighter zones represent areas of the portion of the refractory lining surface less worn out. This 3D map provides a visual representation of the wear of the refractory lining surface of the vessel that facilitates the detection of areas on which a gunning operation may be recommended or required. Each contour line is a closed line joining points of the mesh at equal distance from the TOF cameras. For example, each contour line may be joining points of the mesh with a difference of 1 cm of distance. In this way, zone 501 represents areas of the portion of the refractory lining surface with a wearing of less of 1 cm, zone 502 represents areas of the portion of the refractory lining surface with a wearing between 1 cm and 2 cm, zone 503 represents areas of the portion of the refractory lining surface with a wearing between 2 cm and 3 cm, and so on, zone 504 represents areas of the portion of the refractory lining surface with a wearing between 3 cm and 4 cm, and so on until reaching zone 505 that represents areas of the portion of the refractory lining surface with a wearing between 7 cm and 8 cm.

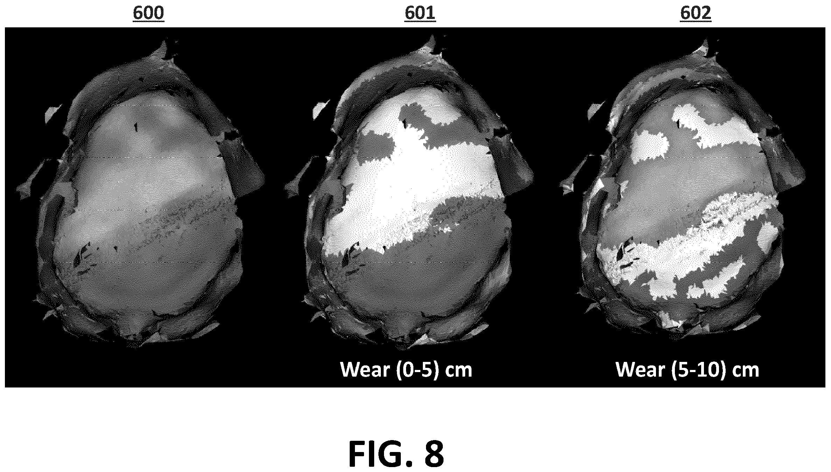

Figure 8 shows another generated 3D map representing the wearing of a portion of the refractory lining surface of the vessel, according to a particular embodiment of the invention.

The 3D map 600 represents a portion of the refractory lining surface of a vessel, in particular, representing one half of the vessel corresponding to a transverse cut along its longitudinal axis. The different grey intensities represent different thicknesses of the refractory lining surface, wherein lighter shades represent less wear and darker shades represent more wear in the refractory lining surface.

The 3D map 601 shows in white colour those areas of the map 600 suffering a wearing that ranges between 0 and 5 cm. The 3D map 602 shows with white colour those areas of the map 600 suffering a wearing that ranges between 5 and 10 cm.

In this text, the term "comprises" and its derivations (such as "comprising", etc.) should not be understood in an excluding sense, that is, these terms should not be interpreted as excluding the possibility that what is described and defined may include further elements, steps, etc. The term "another," as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A method (100) for monitoring a refractory lining (201) of a vessel (202), comprising at least one Time-Of-Flight (TOF) camera (203) configured to project a laser beam (205) onto a surface of the refractory lining (201) of the vessel (202) and through a mouth of the vessel (202), **characterized in that** the method comprises:
projecting (101), by the TOF camera (203), the laser beam (205,301) onto the refractory lining surface so as to create a plurality of laser spots (303) onto a plurality of respective points on the refractory lining surface, the plurality of points generating a mesh (304) representing at least partially the refractory lining surface;
gathering (102), by the at least one TOF camera (203), the laser beam (205,301) after being reflected onto the plurality of points on the refractory lining surface;
calculating (103), by the TOF camera (203), a distance between the at least one TOF camera (203) and each one of the plurality of points on the refractory lining surface; and
determining (104), by a processor (206), a current thickness of the refractory lining (201) at the plurality of points based on the calculated distances and corresponding preestablished distances between the at least one TOF camera (203) and the plurality of points on the refractory lining surface.

2. The method according to claim 1, wherein determining the current thickness of the refractory lining at a particular point of the plurality of points comprises:
comparing the calculated distance and the preestablished distance between the at least one TOF camera (203) and the particular point of the refractory lining surface;
determining the current thickness of the refractory lining (201) at the particular point based on the result of the comparison and a predefined refractory lining thickness.

3. The method according to claim 1 or 2, comprising, prior to projecting the laser beam (205,301) onto the refractory lining surface, determining a reference system between the at least one TOF camera (203) and the vessel (202), the reference system comprising a set of fixed points located on the vessel (202).

4. The method according to claim 3, wherein determining a current thickness of the refractory lining (201) comprises comparing the generated mesh (304) with a predetermined mesh obtained prior to exposing the refractory lining (201) to wear, the comparison being carried out according to the predefined reference system.

5. The method according to claim 4, comprising generating a 3D map (500,600) of the wearing of the refractory lining surface based on the result of the comparison between the generated mesh (304) and the predefined mesh.

6. The method according to any one of the preceding claims, comprising:
projecting, by a first TOF camera (408), a first laser beam onto a first portion of the refractory lining surface so as to generate a first mesh representing the first portion;
projecting, by a second TOF camera (408), a second laser beam onto a second portion of the refractory lining surface so as to generate a second mesh representing the second portion; and
combining, by the processor (206), the first mesh and the second mesh to create a third mesh representing a combination of the first and second portions.

7. The method according to claim 6, wherein combining the first mesh and the second mesh comprises:
detecting overlap areas between the first mesh and the second mesh; and
applying a point cloud alignment algorithm for combining the first and second meshes.

8. A system (200) for monitoring a refractory lining (201) of a vessel (202), comprising at least one Time-Of-Flight (TOF) camera (203) configured to project a laser beam (205) onto a surface of the refractory lining (201) of the vessel (202) and through a mouth of the vessel (202), and a processor (206),
**characterized in that** the at least one TOF camera (203) is configured to:
project a laser beam (301) onto the refractory lining surface of the vessel (202) so as to create a plurality of laser spots (303) onto a plurality of respective points on the refractory lining surface, the plurality of points generating a mesh (304) representing at least partially the refractory lining surface;
receive the laser beam (303) after being reflected onto the plurality of points on the refractory lining surface; and
calculate a distance between the at least one TOF camera (203) and each one of the plurality of points on the refractory lining surface, and
wherein the processor (206) is configured to determine a current thickness of the refractory lining at the plurality of points based on the calculated distances and corresponding preestablished distances between the at least one TOF camera (203) and the plurality of points on the refractory lining surface.

9. The system according to claim 8, comprising a guiding system for the laser beam, the guiding system comprising:
first guiding means (404) located in the at least one TOF camera (408) and configured to project the laser beam onto the refractory lining surface along a first direction (D1); and
second guiding means (420) configured to move the at least one TOF camera 408 in a second direction (D2), such that the laser beam is projected with a 2D pattern onto the refractory lining surface by means of a combined displacement of the laser beam in the first direction (D1) and in the second direction (D2).

10. The system according to 9, wherein the at least one TOF camera (408) and the second guiding means (420) are located within a measurement head (400), the measurement head (400) being preferably located at a free end of a robotic arm (401) that is positionable at a height over a mouth of the vessel.

11. The system according to any one of the preceding claims, wherein the processor (206) is configured to stablish a reference system between the at least one TOF camera (203) and the vessel (202), the reference system at least comprising a set of fixed points located on the vessel (202).

12. The system according to any one of the preceding claims, comprising:
a first TOF camera (408) configured to project a first laser beam onto a first portion of the refractory lining surface so as to generate a first mesh representing the first portion;
a second TOF camera (408) configured to project a second laser beam onto a second portion of the refractory lining surface so as to generate a second mesh representing the second portion; and
wherein the processor (206) is configured to combine the first mesh and the second mesh to create a third mesh representing a combination of the first and second portions.

13. The system according to claim 12, wherein the first portion extends from a first point on an edge of a mouth of the vessel (202) to a centre point of the mouth of the vessel (202), and the second portion extends from the centre point of the mouth of the vessel (202) to a second point on the edge of the mouth of the vessel (202), the first point and the second point on the edge being located opposite to each other.

14. The system according to claim 8 or 9, comprising three TOF cameras (203) located in a fixed frame external to the vessel, the three TOF cameras (203) being positioned at a height and equidistant to each other around a mouth of the vessel (202).

15. A method for gunning a refractory lining (201) of a vessel (202) that comprises the steps of:
determining a current thickness of the refractory lining of the vessel according to the method of any one of claims 1 to 7;
comparing the current thickness of the refractory lining (201) with a predetermined thickness of the refractory lining (201);
determining points of the refractory lining (201) whose thickness is lower than a predefined threshold based on the comparison;
gunning refractory material over areas defined by the determined points.
